(19) Europäisches Patentamt
European Patent Office
Office européen des brevets

(11) **EP 1 712 351 B1**

(12) **EUROPÄISCHE PATENTSCHRIFT**

(45) Veröffentlichungstag und Bekanntmachung des Hinweises auf die Patenterteilung:
**04.03.2009 Patentblatt 2009/10**

(51) Int Cl.:
***B32B 27/32*** *(2006.01)*

(21) Anmeldenummer: **06006052.2**

(22) Anmeldetag: **23.03.2006**

(54) **Elastischer Verbundvliesstoff und Verfahren zu dessen Herstellung**

Composite elastic nonwoven fabric and method for its preparation

Textile non tisse élastique composite et procédé de préparation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.04.2005 DE 102005016246**

(43) Veröffentlichungstag der Anmeldung:
**18.10.2006 Patentblatt 2006/42**

(73) Patentinhaber: **Sandler AG**
**95120 Schwarzenbach/S (DE)**

(72) Erfinder:
• **Hornfeck, Ulrich, Dr.**
**95119 Naila (DE)**
• **Höflich, Wolfgang**
**95126 Schwarzenbach/Saale (DE)**
• **Bernhuber, Uwe**
**95032 Hof/Saale (DE)**
• **Ittner, Klaus**
**95517 Emtmannsberg (DE)**

(74) Vertreter: **Grünecker, Kinkeldey, Stockmair & Schwanhäusser Anwaltssozietät Leopoldstrasse 4 80802 München (DE)**

(56) Entgegenhaltungen:
| | |
|---|---|
| EP-A- 0 360 929 | WO-A-01/43968 |
| WO-A-01/43969 | WO-A-95/16562 |
| DE-A1- 4 016 348 | DE-A1- 4 311 867 |

**Beschreibung**

Die Erfindung bezieht sich auf einen elastischen Verbundvliesstoff mit einer ersten Lage aus einem dehnfähigen Stoff aus Polypropylenfasern und mit einer, mit der ersten Lage verbundenen zweiten Lage aus einem elastischen Material. Die Erfindung bezieht sich auch auf ein Verfahren zum Herstellen eines solchen Verbundvliesstoffes.

Das Bedürfnis nach elastischen Verbundvliesstoffen ist allgemein dadurch begründet, dass elastische Flächengebilde sich in der Regel klebrig oder plastikartig anfühlen und nicht den typischen textilen Griff aufweisen. Man ist daher in der Vergangenheit dazu übergegangen, diese elastischen Flächengebilde mit Vliesstoffen zu laminieren, um auf diese Weise einen elastischen Verbundvliesstoff zu erhalten, der auf seiner Außenseite einen textilen Griff aufweist, insgesamt aber auch elastische Eigenschaften besitzt.

Ein gattungsgemäßes Verfahren ist auch in der EP 0 740 714 beschrieben. Der dort beschriebene Verbundvliesstoff weist wenigstens eine Materiallage mit multipolymeren Fasern aus einem Blend aus Propylenpolymer und Polyethylen auf. Diese Fasern sind mittels einer Vielzahl von Bonds zu einem koherenten, dehnbaren Vliesstoff verfestigt. Eine zweite Materiallage, die entweder dehnbar oder elastisch ausgestaltet ist, ist mit der dehnbaren ersten Vliesstofflage verbunden. Dieser Verbund kann sowohl mit als auch ohne einem Klebemittel erfolgen, d.h. auf thermische oder chemische Art oder durch Kalanderprintbonding oder Kleberauftrag vollflächig oder unterbrochen. Nachteilig an dem bekannten Verbundvlies ist, dass zusätzliche Maßnahmen zum Verbinden der einzelnen Lagen getroffen werden müssen, um ein Trennen der Schichten zu vermeiden.

Aus der DE 102 12 842 A1 ist darüber hinaus ein Vliesmaterial mit elastischen Eigenschaften bekannt, welches entweder aus einem Mehrschichtkomposit mit mindestens einer Schicht mit Fasern aus einem elastischen Polymer besteht, oder aus einer homogenen Fasermischung, in der ein Anteil der Fasern aus einem elastischen Polymer besteht. In der elastischen Schicht eines derartigen Mehrschichtkomposits können neben den elastischen Fasern Bikomponentenfasern oder Melt-Blown-Fasern enthalten sein. Als elastisches Polymer kann Polyurethan, ein Polystyrolblockcopolymer, Copolymere von Colypropylen und Polyethylen oder elastomeres Polypropylen eingesetzt werden. Die anderen Schichten können Polyolefinspunbondschichten, Nadelfilzschichten oder Polyolefinmeltblownschichten sein, die einer Dehnung unterworfen werden, um ihnen gewisse elastische Eigenschaften zu verleihen. Die einzelnen Schichten des Mehrschichtaufbaus sind durch Vernadeln, Wasserstrahlvernadeln oder durch Thermobonding miteinander verbunden.

Ein solches Verfahren ist beispielsweise in der US-A-3,575,782 beschrieben. Ein ähnliches Verfahren ist auch in der DE 103 04 370 offenbart.

All diesen bekannten Verbundvliesstoffen gemein ist, dass sich die einzelnen Lagen der Laminate wieder trennen lassen, was es notwendig macht, die einzelnen Lagen entweder mittels Klebstoff oder Thermobondingverfahren oder mechanisch miteinander zu verbinden.

Aufgabe der vorliegenden Erfindung ist es daher, einen elastischen Verbundvliesstoff zur Verfügung zu stellen, der auf zumindest einer Außenfläche den typischen textilen Griff aufweist, bei dem sich die einzelnen Lagen nicht mehr trennen lassen, ohne dass hier ein zusätzlicher Klebstoff oder eine andere Fügetechnik eingesetzt werden muss.

Diese Aufgabe wird bezüglich des Verbundvliesstoffes dadurch gelöst, dass das elastische Material aus Fasern aus einem Propylen-Ethylen-Copolymer-Gemisch besteht, wobei die Fasern der zweiten Lage in die erste Lage eindringen und die Fasern des elastischen Materials der zweiten Lage einen Teil der Fasern der ersten Lage ummanteln. Bezüglich des Verfahrens wird die Aufgabe dadurch gelöst, dass als elastisches Material Fasern aus einem Propylen-Ethylen-Copolymer-Gemisch in aufgeschmolzenem Zustand auf die erste Lage aufgebracht werden, wobei die Viskosität und die Auftreffgeschwindigkeit der Schmelze so gewählt ist, dass die Fasern des elastischen Materials zumindest teilweise in die erste Lage eindringen und einen Teil der Fasern der ersten Lage ummanteln.

Durch diese Lösung wird erreicht, dass nicht, wie bislang üblich, beide Lagen mehr oder weniger aufeinander liegen, sondern dass die zweite Lage in die erste Lage eindringt und der ersten Lage somit elastische Eigenschaften verleiht, ohne allerdings den textilen Griff dieser ersten Lage zu beeinträchtigen. Der Vorteil dieses Verfahrens besteht zum anderen darin, dass es durch Wahl der Menge des elastischen Materials möglich ist, die Permeabilität des elastischen Verbundvliesstoffes einzustellen. Dabei macht man sich die Eigenschaft zunutze, dass das Propylen-Ethylen-Copolymer, soweit es in Form einer Schmelze auf die Polypropylenfasern der ersten Lage auftrifft, nicht nur diese Fasern ummantelt, sondern bei entsprechender Menge und Verfahrensführung, auch zwischen den Fasern schwimmhautähnliche Segel bildet. Auf diese Weise kann bei entsprechender Menge der Verbundvliesstoff sogar weitestgehend flüssigkeitsundurchlässig, jedoch wasserdampfdurchlässig eingestellt werden.

Als erste Lage ist prinzipiell jedes textile Flächengebilde geeignet, welches neben einer entsprechenden Dehnfähigkeit auch eine ausreichende Materialtiefe für das Eindringen der Schmelze zur Verfügung stellt. Besonders bevorzugt, aber nicht darauf beschränkt, wird die Verwendung von Stapelfaservliesstoffen. Stapelfaservliese haben, bedingt durch eine Vliezahl von abstehenden Faserenden, nicht nur den gewünschten textilen Griff; sie sind im Gegensatz zu anderen Materialien auch voluminöser und geben daher dem Material der zweiten, elastischen Lage besser die Möglichkeit, in die erste Lage einzudringen.

Kardierte Stapelfaservliese, welche im Rahmen dieser Erfindung geeignet sind, werden bevorzugt aus Fasern im Titerbereich 1,7 dtex bis 6,7 dtex hergestellt, die Verfestigung kann mittels thermischer Verfestigung unter Verwendung von Heißluft, aber auch unter Einsatz einer Kalanderprägung geschehen.

Wird der Kalanderprozess gewählt, ist eine geringe Verfestigungsfläche und Verfestigungspunktdichte zu wählen, sodass eine möglichst dehnfähige Lage mit guter Porosität für das eindringende Polymer bereitgestellt wird.

Besonders bevorzugt wird weiterhin, dass das Flächengewicht der ersten Lage zwischen $50g/m^2$ und $15g/m^2$, vorzugsweise bei $22g/m^2$ liegt.

Ferner wird bevorzugt, wenn es sich bei dem Polypropylenfasern der ersten Lage um sog. "skin"-Fasern handelt. Das sind solche Fasern, bei denen die äußerste Schicht der Faser, die sog. "skin" einen wesentlich höheren Schmelzflussindex (MFI) als die darunterliegenden Schichten aufweist. Dieser erhöhte Schmelzflussindex an der Außenschicht der Fasern verbessert das Ineinanderlaufen des elastischen Materials der zweiten Lage in die Außenbereiche der Fasern der ersten Lage und gewährleistet daher die Verbundhaftung.

Für die zweite Lage wird ein elastomeres Material bevorzugt, welches aus einer Mischung von zwei Polymerkomponenten besteht, wobei die erste Polymerkomponente ein Propylen-Ethylen-Copolymer mit einem Propylenanteil von mindestens 80 Gew.% ist, und einen Schmelzpunkt von unter 70°C aufweist, und wobei die zweite Polymerkomponente ein stereoreguläres, isotaktisches Polypropylen mit einem Schmelzpunkt von mehr als 130°C ist, wobei der Anteil der zweiten Polymerkomponente unter 25 Gew.% liegt.

Ein solches Propylen-Ethylen-Copolymer-Gemisch ist in der EP 1 177 337 B1 der Exxon Mobile Chemical Patents Inc. beschrieben. Das Produkt ist unter dem Handelsnamen "Vista Maxx" im Handel erhältlich.

Bezüglich des Verfahrens ist es weiterhin günstig, wenn die zweite Lage durch einen Melt-Blown-Prozess in die erste Lage eingebracht wird. Die Fasern des elastischen Materials dringen bei diesem Verfahren tief in die erste Lage ein und ummanteln einen Großteil der Fasern der ersten Lage, wobei die Gesamtstärke des Verbundvliesstoffs gegenüber der Stärke der ersten Lage kaum zunimmt. In besonderer Weise wird bevorzugt, wenn das Flächengewicht der zweiten Lage zwischen $80g/m^2$ und $30g/m^2$, vorzugsweise $50g/m^2$, beträgt. Anzumerken ist hierbei, dass es sich bei der zweiten Lage eigentlich nicht mehr um eine Lage handelt, da das Material der zweiten Lage zum überwiegenden Teil in die erste Lage eindringt und sich mit der ersten Lage untrennbar verbindet, diese eher elastifiziert als eine zweite Lage zu bilden. Dieser Effekt kann durch eine nachgeschaltete Wärmebehandlung verstärkt werden. Als geeignet hat sich eine Wärmebehandlung erwiesen, die bei einer Temperatur durchgeführt wird, welche unterhalb der Schmelztemperatur der Polymere liegt, welche die erste Lage bilden und darüber hinaus auch unterhalb der Schmelztemperatur der zweiten Polymerkomponente innerhalb der zweiten Lage, jedoch oberhalb der Schmelztemperatur der ersten Polymerkomponente der zweiten Lage, liegt.

Mittels dieser Wärmebehandlung ist des weiteren auch eine Vergleichmäßigung der kristallinen Struktur innerhalb der zweiten Lage erreicht.

Wenn gewünscht ist, ist es bevorzugt während dieser Wärmebehandlung eine weitere Lage auf den Verbundvliesstoff aufzubringen.

Im folgenden wird die Erfindung anhand von Ausführungsbeispielen näher erläutert. Es zeigen:

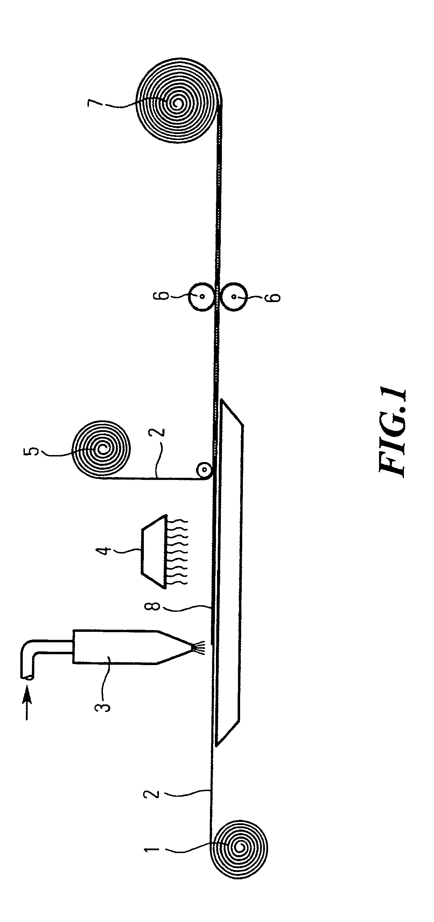

Fig. 1     einen schematischen Verfahrensablauf zum Herstellen eines erfindungsgemäßen Verbundvliesstoffs,

Fig. 2     in einer vergrößerten Darstellung einen Schnitt durch ein Verbundvliesstoff, und

Fig. 3     das Detail III aus der Darstellung in Fig. 2 in einer weiteren Vergrößerung, und

Fig. 4     das Detail IV aus der Darstellung in Fig. 2 in einer noch stärkeren Vergrößerung.

Zunächst wird von der Rolle 1 ein Stapelfaservlies 2 als Trägervlies abgerollt. Bei dem Stapelfaservlies 2 handelt es sich um ein Polypropylenvlies mit einer Stärke von 0,37mm und einem Flächengewicht von $22g/m^2$.

Das Vlies ist punktweise gebondet und behält somit die für das gewünschte Endprodukt erforderliche Dehnfähigkeit und Porosität. Der Begriff Dehnfähigkeit im Rahmen dieser Erfindung beschreibt die Eigenschaft der ersten Lage, sich mit geringer Kraft bis zu einer maximalen Dehnung von bis zu 300 % in der im späteren Einsatz notwendigen Gebrauchsrichtung verformen zu lassen.

Durch die Düse 3 wird im Melt-Blown-Verfahren auf das Trägervlies ein Propylen-Ethylen-Copolymergemisch aufgebracht, welches unter der Bezeichnung "Vista Maxx" von der Fa. Exxon Mobile im Handel erhältlich ist. Die Zusammensetzung im einzelnen ist in der EP 1 177 337 B1 beschrieben. Es handelt sich bei diesem Material um ein elastisches Copolymer mit niedrigem Schmelzpunkt und hoher Wärmekapazität. Bei dem Prozess ist darauf zu achten, dass die aus der Spinndüse 3 austretenden Fasern noch in Form einer Schmelze auf das Trägervlies 2 auftreffen. Dies wird insbesondere bei dem beschriebenen Meltblown-Prozess durch einen geringen Abstand der Düsenspitze der Spinndüse 3 zum Trägervlies 2 erreicht. Dadurch dringt das Propylen-Ethylen-Copolymer tief in die Trägerschicht 2 ein, wie im folgenden noch näher beschrieben wird. Gleichzeitig werden die Fasern des Trägervlieses 2 ummantelt.

Der Prozess ist so gesteuert, dass ca. 50g/m$^2$ des Propylen-Ehtylen-Copolymers auf das Trägervlies 2 aufgebracht werden. Die Stärke des Gesamtvlieses hinter der Spinndüse 3 erhöht sich aufgrund des Eindringens in die erste Faserlage jedoch nur von 0,37mm auf 0,41 mm.

Die Porosität des so erhaltenen Verbundvliesstoffes ändert sich dahingehend, dass im Vergleich zur ursprünglichen Lage 1 die Anzahl der Poren signifikant zunimmt und gleichzeitig die Porengrößen sich verringern. Als geeignet erwiesen haben sich Porengrößen von kleiner 80μm. Dies gewährleistet eine Zunahme der Barriereeigenschaften, hier ausgedrückt als Beständigkeit gegen Wasserdruck in mm Wassersäule, bis hin zu einer Wassersäule von 200mm, bei gleichzeitiger Beibehaltung der Atmungsaktivität, hier ausgedrückt als Luftdurchlässigkeit in l/(m$^2$ · sec) und Wasserdampfdurchgang in g Wasserdampf pro m$^2$ und Tag. Ergebnisse für das vorstehend beschriebne Beispiel können der Tabelle 1 entnommen werden.

Das Ergebnis dieses Prozesses ist ein dehnfähiger, elastischer Verbundvliesstoff, bei dem die Außenlagen einen textilen Griff aufweisen, sich die einzelnen Lagen aber nicht mehr voneinander trennen lassen und bei dem die Lagen ohne Vermittlung eines Klebstoffes oder anderer Maßnahmen unauflöslich miteinander verbunden sind.

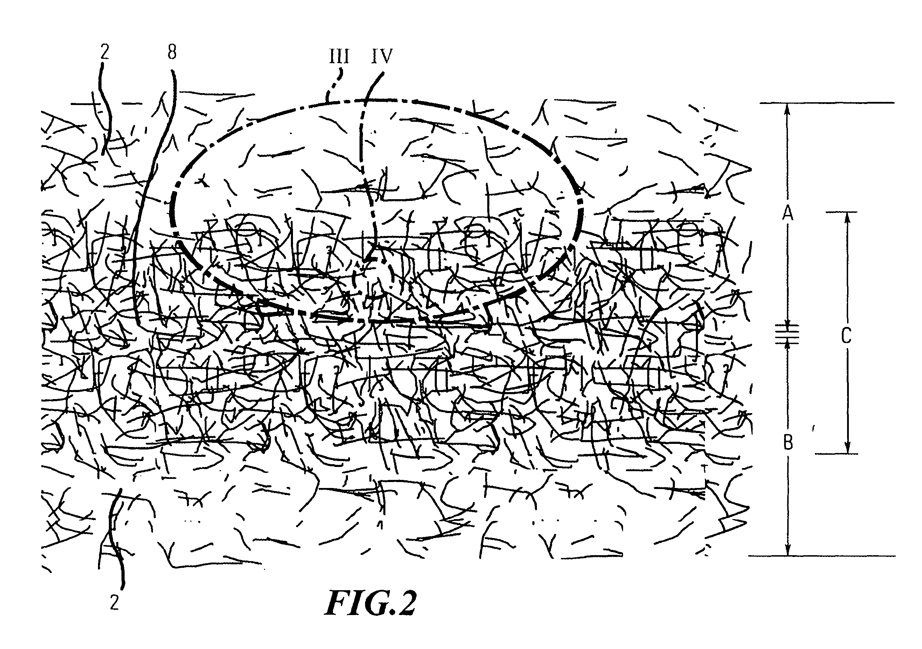

Fig. 2 zeigt hierbei den Schichtaufbau des Verbundvlieses im einzelnen. Mit A und B sind die Dicken der beiden Stapelfaservliese 2, die die Außenlagen des Verbundvliesstoffes bilden, bezeichnet. Mit C ist die Dicke der elastischen Mittellage aus dem Propylen-Ethylen-Copolymer bezeichnet. Es ist erkennbar, dass die Mittellage beide Stapelfaservlieslagen durchdringt, d.h. dass das Material der Mittellage tief in die Stapelfaservliese 2 eindringt.

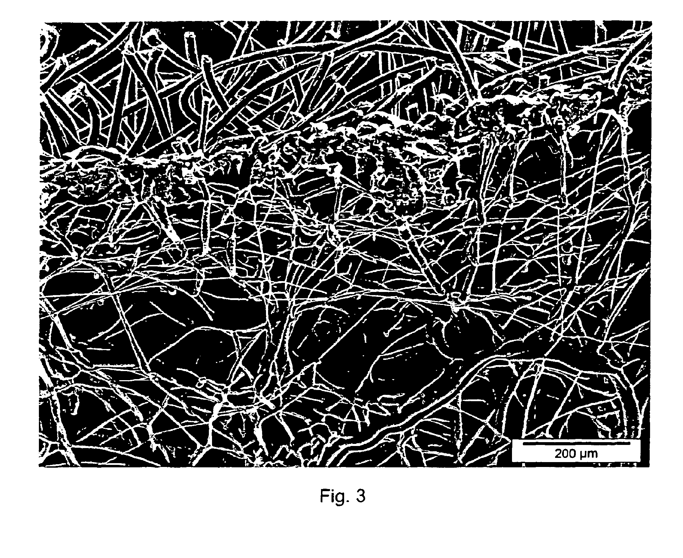

Besser ist dies aus der Elektronenmikroskopaufnahme aus Fig. 3 zu erkennen.

Die im oberen Teil des Bildes herausstehenden einzelnen Fasern gehören zu dem Stapelfaservlies. Im mittleren und unteren Teil des Bildes sind die einzelnen Fasern des Stapelfaservlieses durch das Material der elastischen Lage, nämlich durch das Propylen-Ethylen-Copolymer ummantelt. Zusätzlich verlaufen zwischen den Fasern des Stapelfaservlieses spinnnetzartige Fäden, die die einzelnen Fasern des Stapelfaservlieses quer miteinander verbinden.

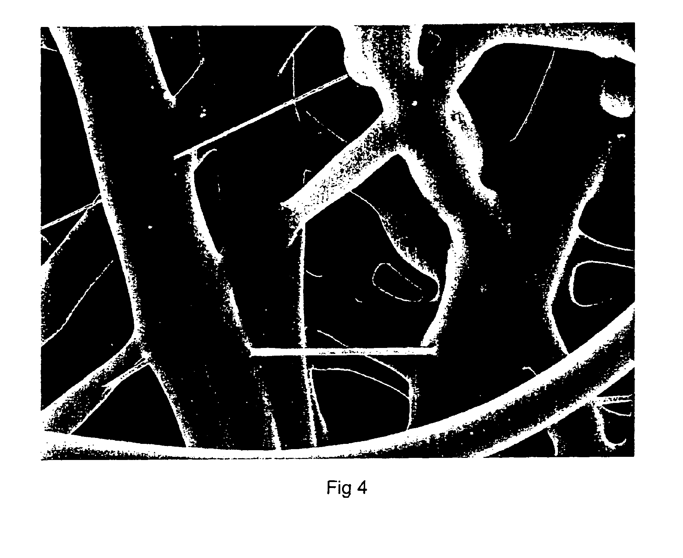

In Fig. 4, in der eine weitere Vergrößerung unter dem Rasterelektronenmikroskop dargestellt ist, sind diese Spinnfäden ebenso zu erkennen, wie die Tatsache, dass die einzelnen Fasern des Stapelfaservlieses durch das Propylen-Ethylen-Copolymer ummantelt sind.

In einer weiteren bevorzugten Ausführungsform wird die aufgebrachte, elastische Lage im Schritt 4 erwärmt und auf Schmelztemperatur gehalten, kurz bevor von der Rolle 5 ein weiteres Stapelfaservlies aus Polypropylen aufgelegt und mittels eines Kalanders angedrückt wird. Das auf diese Weise hergestellt Verbundvlies wird dann auf die Rolle 7 aufgewickelt.

Nach den vorstehenden Ausführungen hergestellte Verbundvliesstoffe können nun in einer Vielzahl von Anwendungen eingesetzt werden.

So ist aufgrund der Elastizität die Verwendung in die Passform von persönlichen Hygieneartikeln beeinflussenden Komponenten möglich.

Die im erfindungsgemäßen Produkt erreichte Kombination der Eigenschaften Elastizität, Barrierewirkung und Atmungsaktivität eröffnet des weiteren die Möglichkeit, einen derartigen Verbundvliesstoff auch als elastische flüssigkeitsabweisende Sperrschicht an der körperabgewandten Fläche eines persönlichen Hygieneartikels zu verwenden, die den Tragekomfort auch bei intensiver Bewegung gewährleistet. Dieses Anforderungsprofil deckt sich auch mit den Forderungen im Bereich medizinischer Verbände. Hier wirkt sich vorteilhaft die Verwendung von hautfreundlichen, polyolefinischen Grundkomponenten aus.

Tabelle: Herstellungsparameter des erfindungsgemäßen Materials

| Parameter | Norm | Einheit | Verbundmaterial 2-Lagig ohne Wärmebehandlung | Verbundmaterial 2-Lagig mit Wärmebehandlung | Verbundmaterial 3-Lagig mit Wärmebehandlung |
|---|---|---|---|---|---|
| Flächengewicht | EN 29073-1 | $g/m^2$ | 77,9 | 78,6 | 100,3 |
| Reißkraft längs | EN 29073-3 | N/5cm | 38,6 | 46,6 | 101,53 |
| Reißkraft quer | EN 29073-3 | N/5cm | 12,9 | 15,4 | 26,58 |
| Fmax - Dehnung längs | EN 29073-3 | % | 65 | 74,7 | 69,8 |
| Fmax - Dehnung quer | EN 29073-3 | % | 135,7 | 156,5 | 203,4 |
| Elastizität quer (als bleibende Dehnung nach Dehnung auf 100% und Entlastung) | EN 29073-3 | % | 21 | 15 | 15 |
| Wasserdampfdurchgang | JIS K 7129-1992 | $g/(m^2 d)$ | 688 | 624 | 480 |
| Wassersäule | EN 20811 | mm | 78 | 150 | 196 |
| Luftdurchlässigkeit (200Pa) | EN-ISO 9237 | $l/m^2/s$ | 215 | 206 | 190 |
| Porengröße | Beschreibung s.u. | $\mu m$ | 40 | 77 | 67 |

Porengröße: Bestimmung der größten Pore nach folgendem Prinzip

Das Prüfverfahren nutzt den physikalischen Zusammenhang, dass der aufzuwendende Druck, der benötigt wird, Luftblasen durch eine flüssigkeitsgetränkte Probe zu pressen, umgekehrt proportional zur Größe der entsprechenden Pore ist.

Die zugehörige Gleichung lautet:

$$d = \frac{4 \times \sigma \times \cos(a) \times 10}{p}$$

Hier bedeuten:

σ: Oberflächenspannung der Benetzungsflüssigkeit [mN/m]

a: Randwinkel am Übergang Flüssigkeit / Stoff (aus Vereinfachungsgründen wird cos (a) =1 angesetzt)

p: Prüfdruck (mbar)

d: Porendurchmesser ($\mu$m)

| | |
|---|---|
| Prüfflüssigkeit: | Ethanol (96%). |
| | Die Qualität des verwendeten Alkohols muss vermerkt werden, die Oberflächenspannung muss bekannt sein. |
| Prüfklima: | Probenvorbereitung nach DIN 50 014: 23/50 |
| Anzahl der Proben: | 10 |
| Probengröße: | Durchmesser 56mm, |
| Prüfgerät: | geeignetes Messgerät, mit geeignetem Druckaufnehmer |
| Prüfablauf: | Die zu untersuchenden Proben werden in Ethanol getränkt |
| | bzw. mit Ethanol befeuchtet, eingespannt und mit einer Ethanolschicht von ca. 5 mm beschichtet. Über das Feinventil wird der Prüfdruck sehr langsam gesteigert (nicht schneller als 1 mbar Anstieg in 2 Sekunden). Beim Aufkommen der ersten Luftblase wird der zugehörige Wert der Porengröße in $\mu$m als "größte Pore" notiert. Der zweite Messpunkt wird festgehalten, wenn die gesamte Oberfläche der Probe mit Luftblasen bedeckt ist. Es ist der Messpunkt "viele Poren". |
| | Werden verarbeitete Papierproben geprüft, wird unterschieden in größte Poren im Faltenbereich und größter Pore in der Fläche. |
| Ergebnis: | Mittelwerte und Streuung, Angabe der Werte in der Einheit $\mu$m |

**Patentansprüche**

1. Elastischer Verbundvliesstoff mit einer ersten Lage aus einem dehnfähigen Stoff aus Polypropylenfasern und mit einer mit der ersten Lage verbundenen zweiten Lage aus einem elastischen Material, **dadurch gekennzeichnet, dass** das elastische Material aus Fasern aus einem Propylen-Ethylen-Copolymer-Gemisch besteht, wobei die Fasern der zweiten Lage (8) in die erste Lage (2) eindringen und die Fasern des elastischen Materials der zweiten Lage einen Teil der Fasern der ersten Lage ummanteln.

2. Verbundvliesstoff nach Anspruch 1, **dadurch gekennzeichnet, dass** die erste Lage aus einem Stapelfaservlies besteht.

3. Verbundvlies nach einem der Ansprüche 1 oder 2, **dadurch gekennzeichnet, dass** das Flächengewicht der ersten Lage zwischen 50g/m$^2$ und 15g/m$^2$, vorzugsweise bei 22g/m$^2$ liegt.

4. Verbundvliesstoff nach einem der Ansprüche 1 bis 3, **dadurch gekennzeichnet, dass** die Polypropylenfasern der ersten Lage eine äußere Schicht aufweisen, die einen wesentlich höheren Schmelzflussindex aufweisen, als die darunter liegenden Schichten.

5. Verbundvlies nach einem der Ansprüche 1 bis 4, **dadurch gekennzeichnet, dass** das elastische Material der zweiten Lage, also das Propylen-Ethylen-Copolymer-Gemisch, aus einer Mischung von 2 Polymerkomponenten besteht, wobei die erste Polymerkomponente ein Propylen-Ethylen-Copolymer mit einem Propylenanteil von mindestens 80Gew.% ist, und einen Schmelzpunkt von unter 70°C aufweist und wobei die zweite Polymerkomponente ein stereoreguläres, isotaktisches Polypropylen mit einem Schmelzpunkt von mehr als 130°C ist, wobei ferner der Anteil der zweiten Polymerkomponente an der Mischung unter 25Gew.% liegt.

6. Verbundvliesstoff nach einem der Ansprüche 1 bis 5, **dadurch gekennzeichnet, dass** die elastische zweite Lage durch eine dritte Lage aus Polypropylenstapelfaservlies abgedeckt ist, wobei die zweite Lage die dritte Lage zumindest teilweise durchdringt.

7. Verbundvliesstoff nach einem der Ansprüche 1 bis 6, **dadurch gekennzeichnet, dass** die durchschnittliche Porengröße der größten Pore des Verbundvliesstoffs kleiner als 80$\mu$m beträgt.

8. Verbundvliesstoff nach einem der Ansprüche 1 bis 7, **dadurch gekennzeichnet, dass** die Wasserdampfdurchlässigkeit des Verbundvliesstoffes mindestens 400 l/(m$^2$ 24h) beträgt.

9. Verbundvliesstoff nach einem der Ansprüche 1 bis 8, **dadurch gekennzeichnet, dass** eine Wasserdruckbeständigkeit mindestens 150mm Wassersäule aufweist.

10. Verbundvliesstoff nach einem der Ansprüche 1 bis 9, **dadurch gekennzeichnet, dass** die bleibende Dehnung in Belastungsrichtung des Verbundvliesstoffes kleiner 20% liegt.

11. Verbundvliesstoff nach einem der Ansprüche 1 bis 10, **dadurch gekennzeichnet, dass** die Dehnfähigkeit des Trägervlieses in Belastungsrichtung mindestens 200% beträgt.

12. Verbundvliesstoff nach einem der Ansprüche 1 bis 11, **dadurch gekennzeichnet, dass** die Dichte des Verbundmaterials mindestens doppelt so groß ist wie die Dichte des Trägervlieses,

13. Verbundvliesstoff nach einem der Ansprüche 1 bis 12, **dadurch gekennzeichnet, dass** die zweite Lage durch eine dritte Lage aus einem Polypropylenstapelfaservlies abgedeckt ist, wobei die Fasern der dritten Lage zumindest teilweise von dem Material der zweiten Lage ummantelt ist.

14. Verfahren zum Herstellen eines Verbundfaservlieses nach einem der Ansprüche 1 bis 13, **dadurch gekennzeichnet, dass** auf eine erste Lage aus einem dehnfähigen Stoff aus Polypropylenfasern als elastisches Material Fasern aus einem Propylen-Ethylen-Copolymer-Gemisch im aufgeschmolzenen Zustand aufgebracht werden, wobei die Viskosität und die Auftreffgeschwindigkeit der Schmelze so gewählt ist, dass die Fasern des elastischen Materials zumindest teilweise in die erste Lage eindringen und einen Teil der Fasern der ersten Lage ummanteln.

15. Verfahren nach Anspruch 14 **dadurch gekennzeichnet, dass** das Material der zweiten Lage durch einen Melt-Blown-Prozess in die erste Lage eingebracht wird.

16. Verfahren nach Anspruch 14 oder 15, **dadurch gekennzeichnet, dass** das Flächengewicht der zweiten Lage zwischen 80g/m$^2$ und 30g/m$^2$, vorzugsweise 50g/m$^2$ beträgt.

17. Verfahren nach einem der Ansprüche 14 bis 16, **dadurch gekennzeichnet, dass** der Verbundvliesstoff einer Wärmebehandlung unterzogen wird, bei einer Temperatur unterhalb des Schmelzpunktes des Materials der unteren Lage sowie des Schmelzpunktes der zweiten Polymerkomponente der zweiten Lage und oberhalb des Schmelzpunktes der ersten Polymerkomponente der zweiten Lage.

18. Verfahren nach einem der Ansprüche 14 bis 17, **dadurch gekennzeichnet, dass** auf die zweite Lage eine dritte Lage aus einem Polypropylenstapelfaservlies aufgebracht wird, solange sich die Fasern der zweiten Lage noch im aufgeschmolzenen Zustand befinden.

**Claims**

1. Composite elastic nonwoven fabric having a first layer consisting of an extensible fabric made from polypropylene fibres and having a second layer consisting of an elastic material bonded to the first layer, **characterised in that** the elastic material consists of fibres of a propylene-ethylene copolymer mixture, the fibres of the second layer (8) penetrating into the first layer (2) and the fibres of the elastic material of the second layer sheathing part of the fibres of the first layer.

2. Composite nonwoven fabric according to claim 1, **characterised in that** the first layer consists of a staple fibre nonwoven fabric.

3. Composite nonwoven fabric according to one of claims 1 or 2, **characterised in that** the weight per unit area of the first layer is between 50 g/m$^2$ and 15 g/m$^2$, preferably 22 g/m$^2$.

4. Composite nonwoven fabric according to one of claims 1 to 3, **characterised in that** the polypropylene fibres of the first layer have an outer coat having a substantially higher melt flow index than the coats below it.

5. Composite nonwoven fabric according to one of claims 1 to 4, **characterised in that** the elastic material of the second layer, in other words the propylene-ethylene copolymer mixture, consists of a mixture of two polymer components, the first polymer component being a propylene-ethylene copolymer having a propylene content of at least 80 wt.% and a melting point below 70°C and the second polymer component being a stereoregular, isotactic polypropylene having a melting point above 130°C, the content of the second polymer component in the mixture being moreover below 25 wt.%.

6. Composite nonwoven fabric according to one of claims 1 to 5, **characterised in that** the elastic second layer is covered by a third layer made from a polypropylene staple fibre nonwoven fabric, the second layer at least partly penetrating the third layer.

7. Composite nonwoven fabric according to one of claims 1 to 6, **characterised in that** the average pore size of the largest pore in the composite nonwoven fabric is less than 8 0 $\mu$m.

8. Composite nonwoven fabric according to one of claims 1 to 7, **characterised in that** the water vapour permeability of the composite nonwoven fabric is at least 400 l/(m$^2$ 24h).

9. Composite nonwoven fabric according to one of claims 1 to 8, **characterised in that** it has a water pressure resistance of at least 150 mm water column.

10. Composite nonwoven fabric according to one of claims 1 to 9, **characterised in that** the permanent elongation in the load direction of the composite nonwoven fabric is less than 20%.

11. Composite nonwoven fabric according to one of claims 1 to 10, **characterised in that** the extensibility of the nonwoven substrate in the load direction is at least 200%.

12. Composite nonwoven fabric according to one of claims 1 to 11, **characterised in that** the density of the composite material is at least twice as high as the density of the nonwoven substrate.

13. Composite nonwoven fabric according to one of claims 1 to 12, **characterised in that** the second layer is covered by a third layer consisting of a polypropylene stable fibre nonwoven fabric, the fibres of the third layer being at least partly sheathed by the material of the second layer.

14. Method for the preparation of a composite nonwoven fabric according to one of claims 1 to 13, **characterised in that** fibres of a propylene-ethylene copolymer mixture in the molten state are applied to a first layer consisting of an extensible fabric made from polypropylene fibres as the elastic material, the viscosity and the impact velocity of the melt being chosen such that the fibres of the elastic material at least partly penetrate into the first layer and sheath part of the fibres of the first layer.

15. Method according to claim 14, **characterised in that** the material of the second layer is introduced into the first layer by a melt blown process.

16. Method according to claim 14 or 15, **characterised in that** the weight per unit area of the second layer is between 80 g/m$^2$ and 30 g/m$^2$, preferably 50 g/m$^2$.

**17.** Method according to one of claims 14 to 16, **characterised in that** the composite nonwoven fabric is subjected to a heat treatment at a temperature below the melting point of the material of the bottom layer and the melting point of the second polymer component of the second layer and above the melting point of the first polymer component of the second layer.

**18.** Method according to one of claims 14 to 17, **characterised in that** a third layer consisting of a polypropylene staple fibre nonwoven fabric is applied to the second layer whilst the fibres of the second layer are still in the molten state.

**Revendications**

**1.** Textile non tissé élastique composite avec une première couche en une substance extensible en fibres de polypropylène et une deuxième couche reliée à la première couche, en un matériau élastique, **caractérisé en ce que** le matériau élastique consiste en des fibres d'un mélange de copolymère propylène-éthylène, où les fibres de la deuxième couche (8) pénètrent dans la première couche (2) et les fibres du matériau élastique de la deuxième couche enveloppent une partie des fibres de la première couche.

**2.** Textile non tissé composite selon la revendication 1, **caractérisé en ce que** la première couche consiste en un non-tissé de fibres discontinues.

**3.** Textile non tissé composite selon la revendication 1 ou 2, **caractérisé en ce que** le poids surfacique de la première couche se situe dans l'intervalle allant de 50 g/m$^2$ à 15 g/m$^2$, de préférence à 22 g/m$^2$.

**4.** Textile non tissé composite selon l'une des revendications 1 à 3, **caractérisé en ce que** les fibres en polypropylène de la première couche présentent une couche extérieure, qui possède un indice de fusion essentiellement plus élevé que les couches sous-jacentes.

**5.** Textile non tissé composite selon l'une des revendications 1 à 4, **caractérisé en ce que** le matériau élastique de la deuxième couche, le mélange de copolymère propylène-éthylène, consiste en un mélange de 2 composants polymères, où le premier composant polymère est un copolymère propylène-éthylène ayant une proportion en propylène d'au moins 80% en poids, et présente un point de fusion inférieur à 70°C, et où le deuxième composant polymère est un polypropylène isotactique, stéréorégulier, ayant un point de fusion de plus de 130°C, où en outre, la proportion du deuxième composant polymère dans le mélange se situe à moins de 25% en poids.

**6.** Textile non tissé composite selon l'une des revendications 1 à 5, **caractérisé en ce que** la deuxième couche élastique est couverte d'une troisième couche en un non-tissé de fibres discontinues de polypropylène, où la deuxième couche traverse au moins partiellement la troisième couche.

**7.** Textile non tissé composite selon l'une des revendications 1 à 6, **caractérisé en ce que** la taille moyenne des pores les plus grands du textile non tissé composite est inférieure à 80 $\mu$m.

**8.** Textile non tissé composite selon l'une des revendications 1 à 7, **caractérisé en ce que** la perméabilité à la vapeur d'eau du textile non tissé composite se situe à au moins 400 l/(m$^2$ 24h).

**9.** Textile non tissé composite selon l'une des revendications 1 à 8, **caractérisé en ce qu'**il présente une résistance à la pression hydraulique d'une colonne d'eau d'au moins 150 mm.

**10.** Textile non tissé composite selon l'une des revendications 1 à 9, **caractérisé en ce que** l'extension résiduelle en direction de la charge du textile non tissé composite se situe à moins de 20%.

**11.** Textile non tissé composite selon l'une des revendications 1 à 10, **caractérisé en ce que** l'extensibilité du non-tissé support en direction de la charge se situe à au moins 200%.

**12.** Textile non tissé composite selon l'une des revendications 1 à 11, **caractérisé en ce que** la densité du matériau composite est au moins le double de la densité du non-tissé support.

**13.** Textile non tissé composite selon l'une des revendications 1 à 12, **caractérisé en ce que** la deuxième couche est couverte d'une troisième couche en un non-tissé de fibres discontinues de polypropylène, où les fibres de la troisième couche sont au moins partiellement enveloppées par le matériau de la deuxième couche.

**14.** Procédé de préparation d'un textile non tissé composite selon l'une des revendications 1 à 13, **caractérisé en ce que** sur une première couche en une substance extensible en fibres de polypropylène, on applique comme matériau élastique, des fibres en un mélange de copolymères propylène-éthylène à l'état fondu, où la viscosité et la vitesse au choc de la masse fondue sont choisies de sorte que les fibres du matériau élastique pénètrent au moins partiellement dans la première couche et enveloppent une partie des fibres de la première couche.

**15.** Procédé selon la revendication 14, **caractérisé en ce que** le matériau de la deuxième couche est appliqué dans la première couche par un procédé d'extrusion soufflage.

**16.** Procédé selon la revendication 14 ou 15, **caractérisé en ce que** le poids surfacique de la deuxième couche se situe dans l'intervalle allant de 80 g/m$^2$ à 30 g/m$^2$, de préférence à 50 g/m$^2$.

**17.** Procédé selon l'une des revendications 14 à 16, **caractérisé en ce que** le textile non tissé composite est soumis à un traitement thermique, à une température inférieure au point de fusion du matériau de la couche inférieure ainsi que du point de fusion du deuxième composant polymère de la deuxième couche et supérieure au point de fusion du premier composant polymère de la deuxième couche.

**18.** Procédé selon l'une des revendications 14 à 17, **caractérisé en ce que** l'on applique sur la deuxième couche, une troisième couche en un non-tissé de fibres discontinues de polypropylène lorsque les fibres de la deuxième couche se trouvent encore à l'état fondu.

*FIG.1*

**FIG.2**

EP 1 712 351 B1

Fig. 3

Fig 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0740714 A
- DE 10212842 A1
- US 3575782 A
- DE 10304370
- EP 1177337 B1